# EUROPEAN PATENT SPECIFICATION

(11) **EP 2 300 898 B1**
(45) Date of publication and mention of the grant of the patent: **13.06.2018**
(21) Application number: 09743405.4
(22) Date of filing: 04.05.2009
(51) Int. Cl.: G06F 3/041, G06F 3/048, H04B 1/40, G06F 3/14, G06F 3/0488, G06F 3/0354

(54) **EXTENDED TOUCH-SENSITIVE CONTROL AREA FOR ELECTRONIC DEVICE**
ERWEITERTER BERÜHRUNGSEMPFINDLICHER STEUERBEREICH FÜR EIN ELEKTRONISCHES GERÄT
ZONE DE COMMANDE TACTILE ÉTENDUE POUR DISPOSITIF ÉLECTRONIQUE

(30) Priority: 06.05.2008 US 115992
(43) Date of publication of application: 30.03.2011
(73) Proprietor: QUALCOMM Incorporated, San Diego, CA 92121-1714 (US)
(72) Inventor: DUARTE, Matias, Gonzalo, Sunnyvale CA 94087 (US); SHIPLACOFF, Daniel, Marc Gatan, Los Angeles CA 90046 (US); DOMINGUEZ, Dianne, Parry, Beverly Hills CA 90210 (US); LYON, Jeremy, Godfrey, Sunnyvale CA 94086 (US); MERCER, Paul, Palo Alto CA 94301 (US); SKILLMAN, Peter, San Carlos CA 94070 (US)
(74) Representative: Potter, Julian Mark
(86) International application number: PCT/US2009/042735
(87) International publication number: WO 2009/137419

(56) References cited:
- US-A1- 2005 003 851
- US-A1- 2005 057 524
- US-A1- 2006 267 951
- US-A1- 2007 152 984
- US-A1- 2007 273 668
- US-A1- 2008 082 930
- US-B1- 6 958 749

## Description

### Field of the Invention

In various exemplary embodiments, the present invention relates to input mechanisms for controlling electronic devices, and more particularly to a touch-sensitive control area that extends beyond the edges of a display screen on such a device.

### Description of the Related Art

It is well-known to provide touch-sensitive screens for electronic devices. Touch-sensitive screens allow an electronic display to function as an input device, thus providing great flexibility in the type of interactions that can be supported. In many devices, touch-sensitive screens are used to replace pointing devices such as trackballs, mice, five-way switches, and the like. In other devices, touch-sensitive screens can supplement, or be supplemented by, other input mechanisms.

Touch-sensitive screens provide several advantages over other input mechanisms. Touch-sensitive screens can replace physical buttons by providing on-screen buttons that can be touched by the user. The on-screen buttons can be arranged so that they resemble an alphabetic or numeric key-board, or they can have specialized functions. This often simplifies input operations by providing only those options that are relevant at a given time.

Touch-sensitive screens can also help to provide customizability and globalization of input mechanisms. An on-screen keyboard can be easily adapted to any desired language, and extra keys can be provided as appropriate to the specific application. Certain buttons can be highlighted, moved, or otherwise modified in a dynamic way to suit the application.

In addition, touch-sensitive screens can be more reliable than physical keyboards, because they reduce the reliance on moving parts and physical switches.

One particular advantage of touch-sensitive screens is that they allow direct manipulation of on-screen objects, for example by facilitating control and/or activation of such objects by touching, tapping, and/or dragging. Thus, when a number of items are displayed on a screen, touch-sensitivity allows a user to perform such operations on specific items in a direct and intuitive way.

However, some operations in connection with control of an electronic device are not particularly well suited to direct manipulation. These include operations that affect the entire screen, application environment, or the device itself. On-screen buttons can be provided to allow access to such operations, but such buttons occupy screen space that can be extremely valuable, especially in compact, mobile devices. In addition, providing on-screen buttons for such functions allows only a limited set of operations to be available at any given time, since there is often insufficient screen space to provide buttons for all such functions.

In some cases, on-screen buttons or objects are relatively small, causing some users to have difficulty activating the correct command or object, or even causing them to inadvertently cause the wrong command or object to be activated or manipulated. This problem, which is particularly prevalent in devices having small screens, can cause touch-screens to be relatively unforgiving in their interpretation of user input. In addition, as a natural consequence of combining an output device with an input device in the same physical space, the use of a touch-screen often causes users to obscure part of the screen in order to interact with it. Screens layouts may be designed so that important elements tend not to be obscured; however, such design may not take into account right- or left-handedness.

Another disadvantage of touch-sensitive screens is that their dynamic nature makes it difficult for users to provide input without looking at the screen. A user cannot normally discern the current state of the device without looking at it, and therefore cannot be sure as to the current location or state of various on-screen buttons and controls at any given time. This makes it difficult to control the device while it is one's pocket, or while one is engaged in a task that inhibits one's ability to look at the device.

What is needed is a system and method that provides the advantages of touch-sensitive screens while avoiding their limitations. What is further needed is a system and method that facilitates direct manipulation of on-screen objects while also providing mechanisms for performing commands for which direct manipulation is not well-suited. What is further needed is a system and method that provides access to a wide variety of commands and allows input of such commands in a simple, intuitive way, without cluttering areas of a display screen with an excess of buttons and controls.

US Patent No. 6 958 749 B1 discloses a device with a touch screen which facilitates combined gestures.

### Summary of the Invention

According to various embodiments of the present invention, a touch-sensitive display screen is enhanced by a touch-sensitive control area that extends beyond the edges of the display screen. The touch-sensitive area outside the display screen, referred to as a "gesture area," allows a user to activate commands using a gesture vocabulary. Commands entered in the gesture area can be independent of the current contents of the display screen. Certain commands can therefore be made available at all times without taking up valuable screen space, an advantage that is of particular benefit for small mobile devices.

In one embodiment, the present invention allows some commands to be activated by inputting a gesture within the gesture area. Other commands can be activated by directly manipulating on-screen objects, as in a conventional touch-sensitive screen. Yet other commands can be activated via a combination of these two input mechanisms. Specifically, the user can begin a gesture within the gesture area, and finish it on the screen (or vice versa), or can perform input that involves contemporaneous contact with both the gesture area and the screen. Since both the gesture area and the screen are touch-sensitive, the device is able to interpret input that includes one or both of these areas, and can perform whatever action is appropriate to such input.

In one embodiment, this highly flexible approach allows, for example, a command to be specified in terms of an action and an target: a particular gesture as performed in the gesture area can specify the action to be performed, while the particular on-screen location where the user finishes (or starts) the input can specify a target (such as an on-screen object) on which the command is to be performed. The gesture area can also be used to provide input that modifies a command entered by direct manipulation on the screen.

The ability to detect gestures allows a large vocabulary to be developed, so that a large number of commands can be made available without obscuring parts of the screen with buttons, menus, and other controls. The combination of such a gesture vocabulary with direct manipulation provides unique advantages not found in prior art systems.

In various exemplary embodiments, the present invention also provides a way to design a user interface that is simple and easy for beginners, while allowing sophisticated users to access more complex features and to perform shortcuts. Beginners can rely on the direct manipulation of on-screen objects, while the more advanced users can learn more and more gestures as they become more familiar with the device.

In addition, in various exemplary embodiments, the present invention provides a mechanism for providing certain commands in a consistent manner at all times where appropriate. The user can be assured that a particular gesture, performed in the gesture area, will cause a certain action to be performed, regardless of what is on the screen at a given time.

In various exemplary embodiments, the present invention also provides an input interface that is more forgiving than existing touch-sensitive screens. Users need not be as precise with their input operations, since a larger area is available. Some gestures may be performed at any location within the gesture area, so that the user need not be particularly accurate with his or her fingers when inputting a command. Users can also perform such gestures without obscuring a portion of the screen. Users can also more easily use the input mechanism when not looking at the screen, since gestures can be performed in the gesture area without reference to what is currently displayed on the screen.

Accordingly, the present invention in one embodiment provides a mechanism for facilitating access to a large number of commands in a limited space and without the need for a large number of on-screen buttons or physical buttons, and for providing the advantages of direct manipulation while avoiding its limitations.

The invention is defined by the appended claims. Additional advantages will become apparent in the following detailed description.

### Brief Description of the Drawings

The accompanying drawings illustrate several embodiments of the invention and, together with the description, serve to explain the principles of the invention. One skilled in the art will recognize that the particular embodiments illustrated in the drawings are merely exemplary, and are not intended to limit the scope of the present invention.
Figs. 1A through 1E depict examples of a device having a touch-sensitive screen and a gesture area surrounding the touch-sensitive screen, according to one embodiment.
Fig. 2 depicts an example of a device having a touch-sensitive screen and a gesture area below the touch-sensitive screen, according to one embodiment.
Fig. 3 depicts an example of a device having a touch-sensitive screen and a gesture area that is coextensive with the front surface of the device, according to one embodiment.
Figs. 4A through 4W depict various examples of gestures that can be entered according to an embodiment of the invention.
Fig. 5 is a flowchart depicting a method of the present invention, according to one embodiment.
Fig. 6 depicts an example of a tap gesture.
Fig. 7 depicts an example of a tap and drag gesture.
Figs. 8A and 8B depict an example of a tap, hold, and release gesture to perform an edit operation.
Fig. 9 depicts an example of an interaction with an edit button.
Figs. 10A and 10B depict an example of a tap, hold, and drag gesture to reorder items in a list.
Figs. 11A through 11E depict an example of a swipe gesture to delete an item from a list.
Figs. 12A through 12D depict another example of a swipe gesture to delete an item from a list.

### Detailed Description of the Embodiments

### Definitions

For purposes of the following description, the following terms are defined:
- Touch-sensitive surface: a surface of a device that is capable of detecting contact;
- Touch-sensitive screen: a touch-sensitive surface that also functions as a display screen;
- Touch command: any command that is entered by the user by touching a touch-sensitive surface;
- Direct manipulation: a touch command whose target is specified by contact with a element displayed on a touch-sensitive screen;
- Gesture: a touch command that includes a distinctive motion that can be interpreted to specify which command is to be performed;
- Gesture area: a touch-sensitive surface that does not function as a display screen.

### System Architecture

In various embodiments, the present invention can be implemented on any electronic device, such as a handheld computer, personal digital assistant (PDA), personal computer, kiosk, cellular telephone, and the like. For example, the invention can be implemented as a command input paradigm for a software application or operating system running on such a device. Accordingly, the present invention can be implemented as part of a graphical user interface for controlling software on such a device.

In various embodiments, the invention is particularly well-suited to devices such as smartphones, handheld computers, and PDAs, which have limited screen space and in which a large number of commands may be available at any given time. One skilled in the art will recognize, however, that the invention can be practiced in many other contexts, including any environment in which it is useful to provide access to commands via a gesture-based input paradigm, while also allowing direct manipulation of on-screen objects where appropriate. Accordingly, the following description is intended to illustrate the invention by way of example, rather than to limit the scope of the claimed invention.

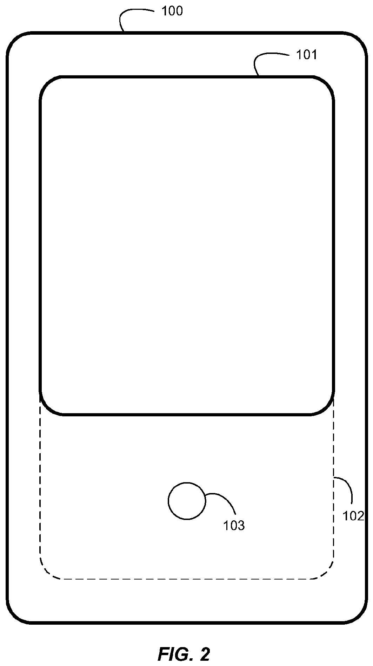

Referring now to Fig. 2, there is shown an example of an example of a device 100 having a touch-sensitive screen 101 and a gesture area 102, according to one embodiment.

For illustrative purposes, device 100 as shown in Fig. 2 is a personal digital assistant or smartphone. Such devices commonly have telephone, email, and text messaging capability, and may perform other functions including, for example, playing music and/or video, surfing the web, running productivity applications, and the like. The present invention can be implemented in any type of device having a touch-sensitive screen, and is not limited to devices having the listed functionality. In addition, the particular layout shown in Fig. 2 is merely exemplary and is not intended to be restrictive of the scope of the claimed invention.

In various embodiments, touch--sensitive screen 101 and gesture area 102 can be implemented using any technology that is capable of detecting a location of contact. One skilled in the art will recognize that many types of touch-sensitive screens and surfaces exist and are well-known in the art, including for example:
- capacitive screens/surfaces, which detect changes in a capacitance field resulting from user contact;
- resistive screens/surfaces, where electrically conductive layers are brought into contact as a result of user contact with the screen or surface;
- surface acoustic wave screens/surfaces, which detect changes in ultrasonic waves resulting from user contact with the screen or surface;
- infrared screens/surfaces, which detect interruption of a modulated light beam or which detect thermal induced changes in surface resistance;
- strain gauge screens/surfaces, in which the screen or surface is spring-mounted, and strain gauges are used to measure deflection occurring as a result of contact;
- optical imaging screens/surfaces, which use image sensors to locate contact;
- dispersive signal screens/surfaces, which detect mechanical energy in the screen or surface that occurs as a result of contact;
- acoustic pulse recognition screens/surfaces, which turn the mechanical energy of a touch into an electronic signal that is converted to an audio file for analysis to determine position of the contact; and
- frustrated total internal reflection screens, which detect interruptions in the total internal reflection light path.

Any of the above techniques, or any other known touch detection technique, can be used in connection with the device of the present invention, to detect user contact with screen 101, gesture area 102, or both.

In one embodiment, the present invention can be implemented using a screen 101 and/or gesture area 102 capable of detecting two or more simultaneous touch points, according to techniques that are well known in the art. The touch points can all be located on screen 101 or on gesture area 102, or some can be located on each.

In one embodiment, the present invention can be implemented using other gesture recognition technologies that do not necessarily require contact with the device. For example, a gesture may be performed over the surface of a device (either over screen 101 or gesture area 102), or it may begin over the surface of a device and terminate with a touch on the device (either on screen 101 or gesture area 102). It will be recognized by one with skill in the art that the techniques described herein can be applied to such non-touch-based gesture recognition techniques.

In one embodiment, device 100 as shown in Fig. 2 also has a physical button 103. In one embodiment, physical button 103 can be used to perform some common function, such as to return to a home screen or to activate a selected on-screen item. Physical button 103 is not needed for the present invention, and is shown for illustrative purposes only. In one embodiment, physical button 103 is touch sensitive, so that the user's gestures as entered in gesture area 102 and/or on screen 101 can be initiated on button 103 and/or can pass over button 103 as well. For purposes of the following description, gesture area 102 will be considered to include button 103 for embodiments where button 103 is touch-sensitive. In one embodiment, such functionality is implemented using techniques described in the above-cited related patent application.

In the example of Fig. 2, gesture area 102 is located immediately below touch-sensitive screen 101, with no gap between screen 101 and gesture area 102. This allows the user to enter touch commands such as gestures in gesture area 102 and/or touch-sensitive screen 101, as well as to enter touch commands that cross over from gesture area 102 to touch-sensitive screen 101, and vice versa. Specific examples of such touch commands will be described in more detail below.

One skilled in the art will recognize that, in various embodiments, gesture area 102 can be provided in any location with respect to screen 101 and need not be placed immediately below screen 101 as shown in Fig. 2. In addition, there may be a gap between gesture area 102 and screen 101, without departing from the essential characteristics of the present invention. Where a gap is present, device 100 may simply ignore the gap when interpreting touch commands that cross over from gesture area 102 to touch-sensitive screen 101, and vice versa.

In various embodiments, gesture area 102 can be visibly delineated on the surface of device 100, if desired, for example by an outline around gesture area 102, or by providing a different surface texture, color, and/or finish for gesture area 102 as compared with other surfaces of device 100. Such delineation is not necessary for operation of the present invention.

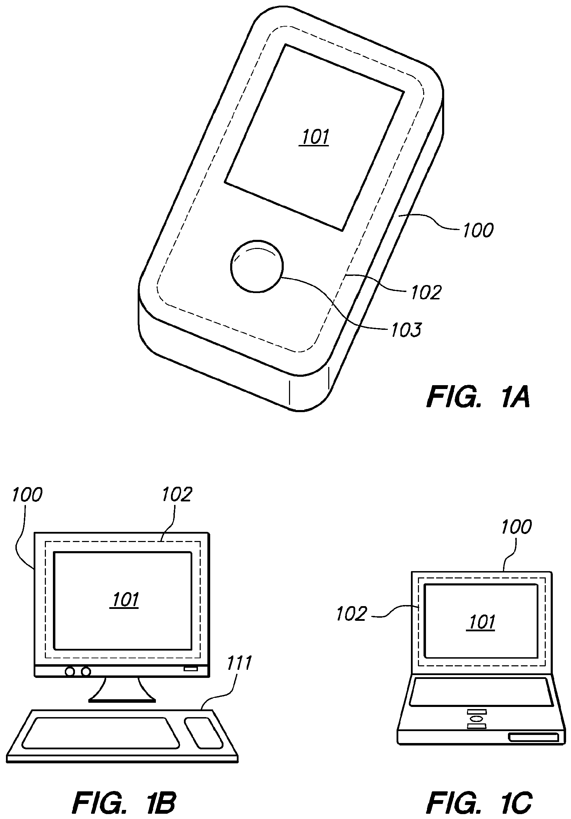

Referring now to Figs. 1A through 1E, there are shown other examples of device 100 according to various embodiments, wherein gesture area 102 surrounds touch-sensitive screen 101. Such an arrangement allows the user to enter a touch command above, below, or to either side of screen 101, as long as the command is entered within gesture area 102. The touch command can cross over from gesture area 102 to touch-sensitive screen 101, and vice versa; since gesture area 102 surrounds touch-sensitive screen 101, the cross-over can take place at any edge of screen 101, and is not limited to the bottom edge only.

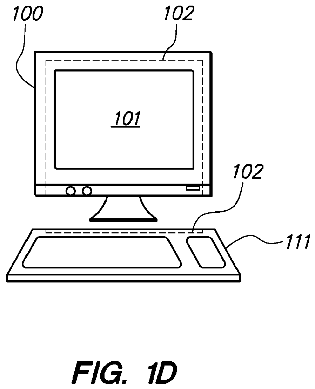

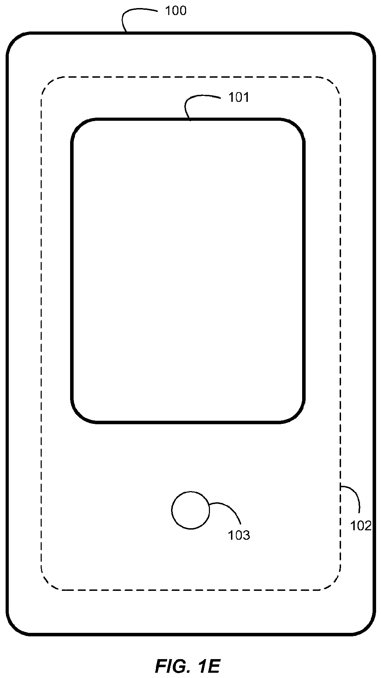

Figs. 1A and 1E depict an embodiment where device 100 is a handheld device. Fig. 1B depicts an embodiment where device 100 is a desktop computer including separate keyboard 111, and gesture area 102 surrounds screen 101. Fig. 1C depicts an embodiment where device 100 is a laptop computer, and gesture area 102 surrounds screen 101. Fig. 1D depicts an embodiment where device 100 is a desktop computer, and gesture area 102 is disjoint, including a portion that surrounds screen 101 and a portion above keyboard 111. One skilled in the art will recognize that many other embodiments are possible.

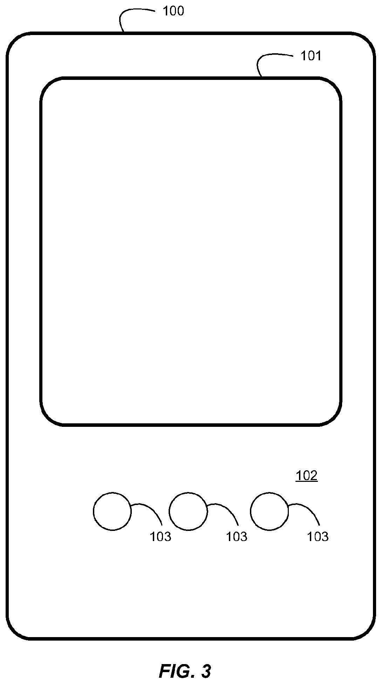

Referring now to Fig. 3, there is shown another example of an embodiment of device 100, wherein gesture area 102 surrounds touch-sensitive screen 101 and extends across the entire front surface of device 100. Here, the user to enter a touch command at any location on the front surface of device 100, whether within or outside screen 101. As with the arrangement of Fig. 2, the touch command can cross over from gesture area 102 to touch-sensitive screen 101, and vice versa; since gesture area 102 surrounds touch-sensitive screen 101, the cross-over can take place at any edge of screen 101, and is not limited to the bottom edge only

For illustrative purposes, Fig. 3 depicts device 100 having three physical buttons 103 according to one embodiment. One skilled in the art will recognize that any number of such buttons 103, or no buttons 103, can be included, and that the number of physical buttons 103, if any, is not important to the operation of the present invention.

In general, in various embodiments, the user can input a touch command on device 100 by any of several methods, such as:
- directly manipulate or activate an object displayed on screen 101;
- directly manipulate or activate an object displayed on screen 101, and modify the manipulation or activation by contact within gesture area 102;
- perform a gesture within gesture area 102 and/or screen 101;
- perform a gesture within gesture area 102 and/or screen 101 and indicate a target for the command by direct manipulation or activation on screen 101; or
- perform a gesture within gesture area 102 and/or screen 101,
wherein the gesture inherently indicates a target for the command, by for example, starting or ending on an object displayed on screen 101.

### Examples

In one embodiment, as described above, the present invention provides a way to implement a vocabulary of touch commands including gestures that are performed within gesture area 102, within screen 101, or on some combination of the two. As mentioned above, gestures can also be performed over the surface of gesture area 102 and/or screen 101, without necessarily contacting these surfaces. The invention thus expands the available space and the vocabulary of gestures over prior art systems.

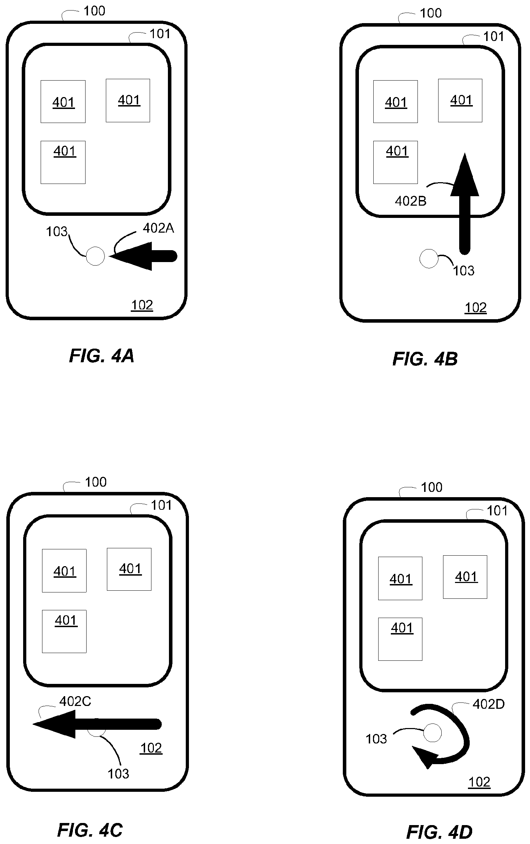

Referring now to Figs. 4A through 4W, there are shown several examples of touch commands entered on device 100 by the above-listed mechanisms. These examples are provided for illustrative purposes, and are not intended to limit the scope of the invention as claimed. In the examples, device 100 is shown having a screen 101 including several on-screen objects 401 such as icons. For clarity of illustration, gesture area 102 is assumed to extend to the edges of device 100. A single physical button 103 is shown.

In one embodiment, device 100 allows for some variation in the angles of gestures, so that the gestures need not be precisely horizontal or vertical to be recognized. Device 100 is able to identify the user's intent as a horizontal or vertical gesture, or other recognizable gesture, even if the user deviates from the definitive, ideal formulation of the gesture.

In one embodiment, gestures can be recognized regardless of the current orientation of device 100. Thus, a particular gesture would generally have the same meaning whether device 100 is in its normal orientation or rotated by 180 degrees, 90 degrees, or some other amount. In one embodiment, device 100 includes orientation sensors to detect the current orientation according to well known techniques.

### Commands Performed within Gesture Area 102

In the example of Fig. 4A, in one embodiment the user performs a half-swipe left gesture 402A entirely within gesture area 102. This gesture 102A is indicated by an arrow in Fig. 4A, showing that the user has swiped across a portion of gesture area 102 without crossing over physical button 103. In one embodiment, such a gesture 402A returns the user to a previous view within an application. The user can perform the half-swipe left gesture 402A anywhere within gesture area 102; the associated function does not require identification of any particular target on screen 101.

In the example of Fig. 4B, in one embodiment the user performs an upward swipe gesture 402B starting within gesture area 102 and ending within screen 101. In one embodiment, such a gesture 402A causes a Quick Launch bar to appear, allowing the user to launch an application by tapping on an icon within the bar. The user can start the upward swipe gesture 402B anywhere within gesture area 102; the associated function does not require identification of any particular target on screen 101.

In the example of Fig. 4C, in one embodiment the user performs a full-swipe left gesture 402C entirely within gesture area 102, passing directly over button 103. In one embodiment, such a gesture 402C returns the user to a previously viewed application. The user can perform the long swipe left gesture 402C anywhere within gesture area 102; the associated function does not require identification of any particular target on screen 101. The user can pass directly over button 103 or can swerve around it; either way, device 100 recognizes the intent of the user. Another command, such as "next application", can be performed in response to a full-swipe right gesture (not shown).

In the example of Fig. 4D, in one embodiment the user performs a clockwise orbit gesture 402D entirely within gesture area 102. In one embodiment, such a gesture 402D performs a zoom function. This gesture could also be used to scroll long lists, or control playback of media such as in a physical 'scrub' controller for a video editing deck. In one embodiment, the user can perform the orbit gesture 402D anywhere within gesture area 102; in another embodiment, the gesture may have different meaning depending on whether it circles button 103 or is performed in some other part of gesture area 102. In one embodiment, an orbit gesture may have a different meaning if performed in a counterclockwise direction. In general, the orbit gesture 402D has an associated function that does not require identification of any particular target on screen 101.

### Commands Performed on Touch-Sensitive Screen 101

In one embodiment, the user can also initiate some commands by direct manipulation of objects 401 on screen 101. Direct manipulation is particularly well-suited to commands whose target is represented by an on-screen object 401. Examples are discussed below.

*Focus*/*Act:* In one embodiment, the user can tap on an object 401 or on some other area of screen 101 to focus the object 401 or screen area, or to perform an action identified by the object 401 or screen area, such as opening a document or activating an application.

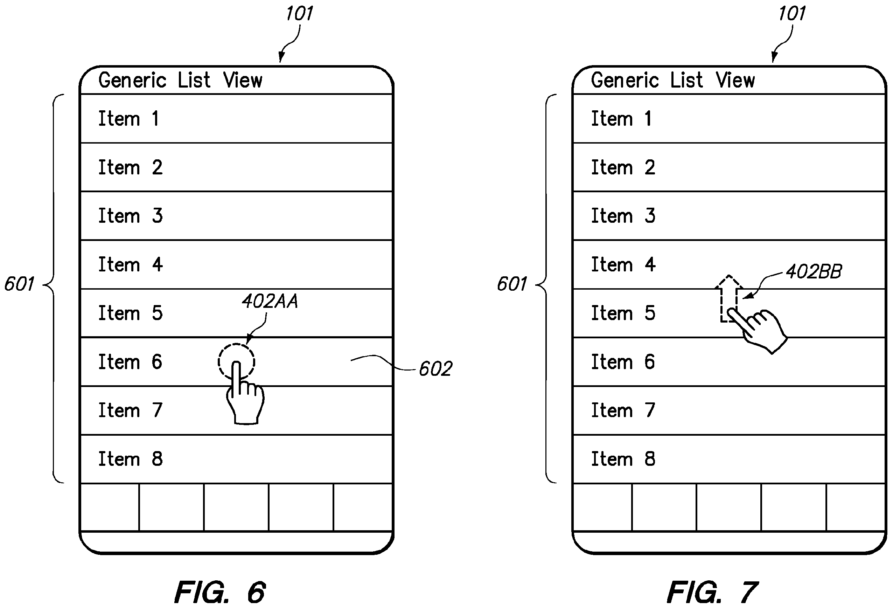

Referring now to Fig. 6, there is shown an example of a tap gesture 402AA to select an item 602 in a list 601 currently displayed on screen 101.

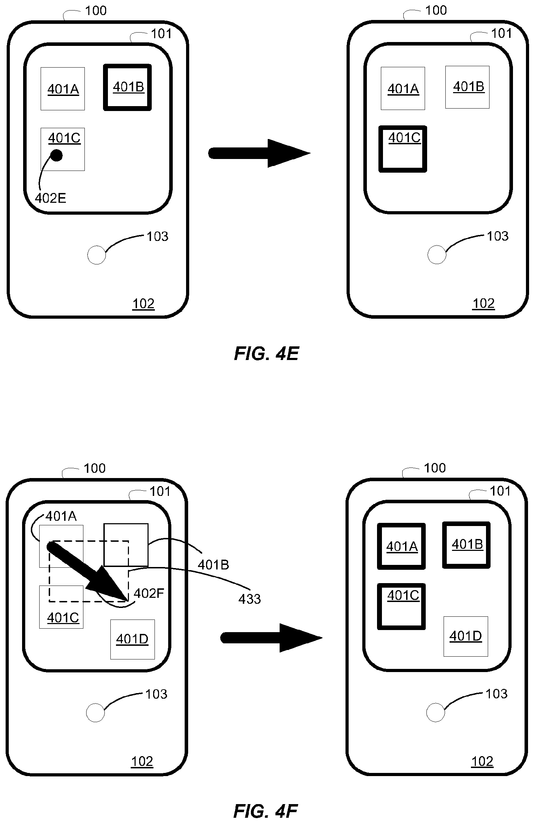

*Select*/*Highlight:* Referring now to Fig. 4E, in one embodiment the user can perform a "press and hold" action on an object 401C, by maintaining contact at a location 402E within object 401C for at least some predetermined period of time, such as 500 milliseconds. In one embodiment, this selects or highlights object 401C, and de-selects any other objects 401B that may have previously been selected. A selected or highlighted object 401C is thereby identified as a target for a subsequent command. In the example, a highlighted object 401 is denoted by a heavy outline.

In one embodiment, a modifier key, such as a shift key, is provided. Modifier key may be physical button 103, or some other button (not shown). Certain commands performed in touch-sensitive screen 101 can be modified by performing the command while holding down the modifier key, or by pressing the modifier key prior to performing the command.

For example, the user can perform a shift-tap on an object 401 by tapping on an object 401 or on some other area of screen 101 while holding the modifier key. In one embodiment, this selects or highlights an object 401, without de-selecting any other objects 401 that may have previously been selected.

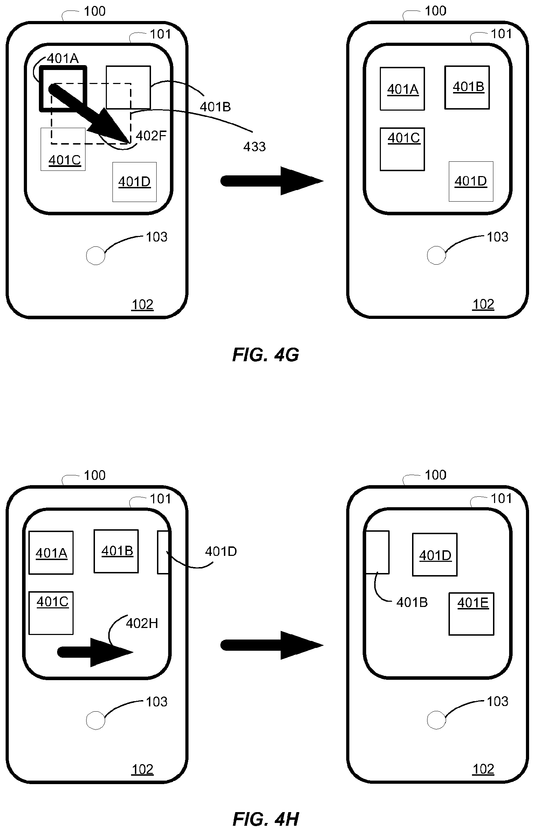

In one embodiment, the modifier key can also be used to perform a shift-drag command. While holding the modifier key, the user drags across a range of objects 401 to select a contiguous group, as shown in Fig. 4F. In the example, the user performs a shift-drag gesture 402F over objects 401A, 401B, and 401C causing those three objects to be selected or highlighted. In one embodiment, a rectangle 433 or other indicator can optionally be shown around the objects 401 being selected. Any previously selected objects 401 remain selected. In one embodiment, as shown in Fig. 4G, if the first object 401A covered by the drag is already selected, then the drag gesture 402F de-selects the objects 401 as the user shift-drags across them, and any already unselected objects 401 remain unselected.

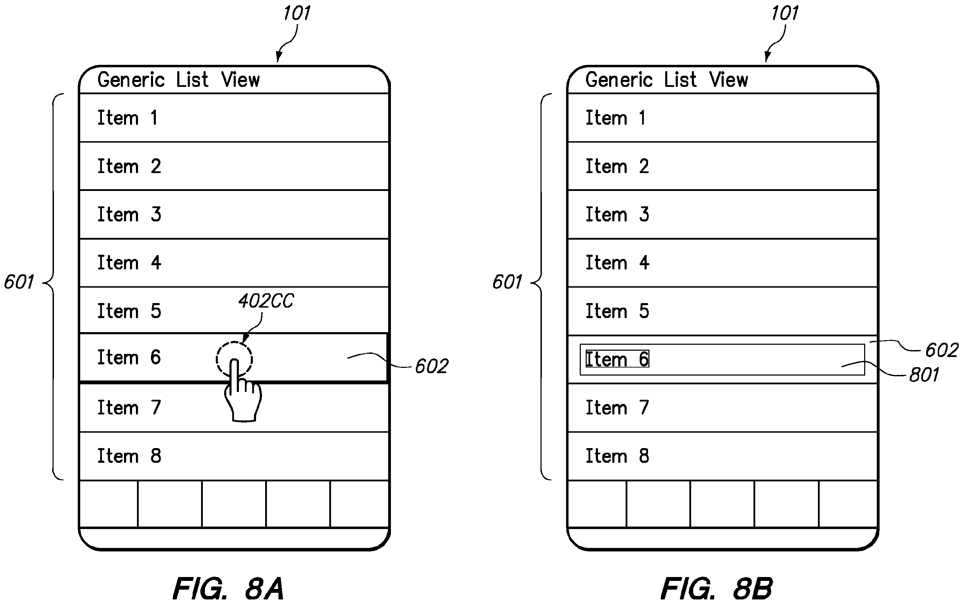

Referring now to Figs. 8A and 8B, there is shown an example of a tap, hold, and release gesture 402CC to perform an edit operation on item 602 according to one embodiment. After the user has performed gesture 402CC, a text field 801 is displayed. This allows the user to edit item 602 in place. The user can commit the edit by tapping outside text field 801, navigating away from the page, or pressing an Enter button (not shown).

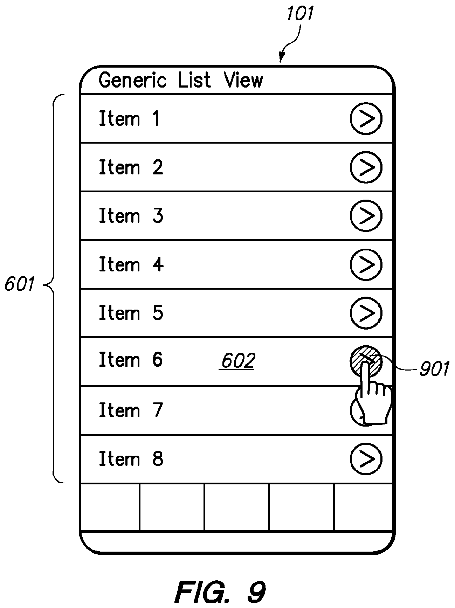

In one embodiment, a button can be shown, to provide access to a screen for performing more detailed editing operations. Referring now to Fig. 9, there is shown an example of a user's interaction with edit button 901. Edit button 901 is shown adjacent to item 602. The user can tap on edit button 901 to go to an edit page (not shown) for item 602.

*Scroll:* Referring now to Fig. 4H, in one embodiment the user can perform a drag-scroll operation by performing a drag gesture 402H (also referred to as a flick gesture) across screen 101 in a direction that supports scrolling for the current state of the display. In one embodiment, the drag must start moving immediately upon contact with screen 101, in order to be recognized as a scroll. The current display scrolls by an amount proportional to the distance moved by the user's finger, as shown in the right side of Fig. 4H. In one embodiment, the scroll amount can be adjusted or dampened as appropriate.

In one embodiment, the user can also flick across screen 101 in a direction that supports scrolling for the current state of the display. In one embodiment, the flick must start immediately upon contact with screen 101, and the user's finger must leave the surface of screen 101 before stopping movement, in order to be recognized as a flick. The current display scrolls by an amount proportional to the speed and distance which the user flicked. A drag-scroll may be converted into a flick by lifting the finger before coming to a rest.

In one embodiment, if the display on screen 101 is already scrolling, then a tap or drag immediately interrupts the current scroll. If the user tapped, the current scroll stops. If the user dragged, a new drag-scroll is initiated.

Referring now to Fig. 7, there is shown an example of a flick gesture 402BB to cause list 601 currently displayed on screen 101 to scroll upwards according to one embodiment.

*Next*/*Previous:* In certain embodiments and contexts, the user can drag across screen 101 horizontally to show the next or previous item in a sequence of items. This can be distinguished from a drag scroll by being executed perpendicular to the axis of scrolling.

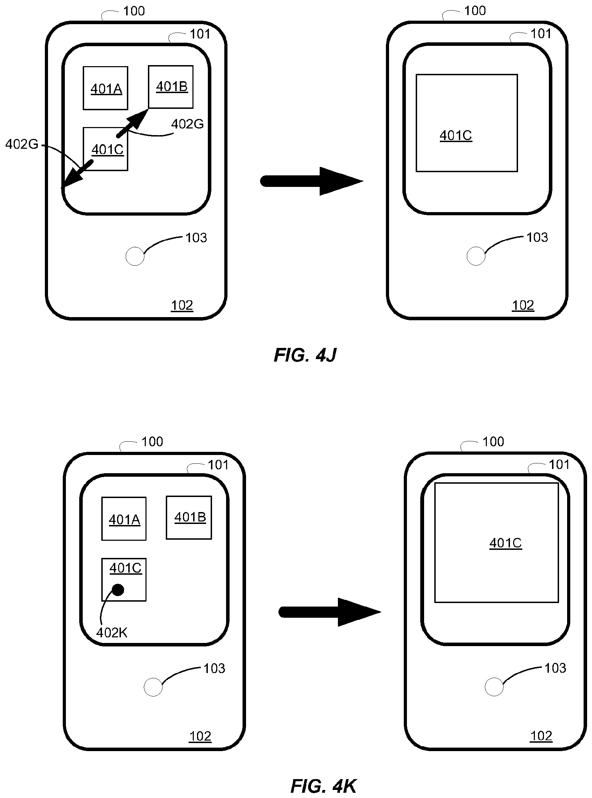

*Zoom:* Referring now to Fig. 4J, in one embodiment, the user can cause an onscreen object 401C, or the entire display area shown in screen 101, to zoom in or out by placing two fingers on screen 101 and bringing them apart or drawing them together. The display is scaled as though the fingers were affixed to reference points on the display.

In one embodiment, the user can also double-tap (tap twice within some period of time) on a desired center point of a zoom operation. This causes the display to zoom in by a predetermined amount. In one embodiment, if the user taps on gesture area 102, the display zooms out by a predetermined amount.

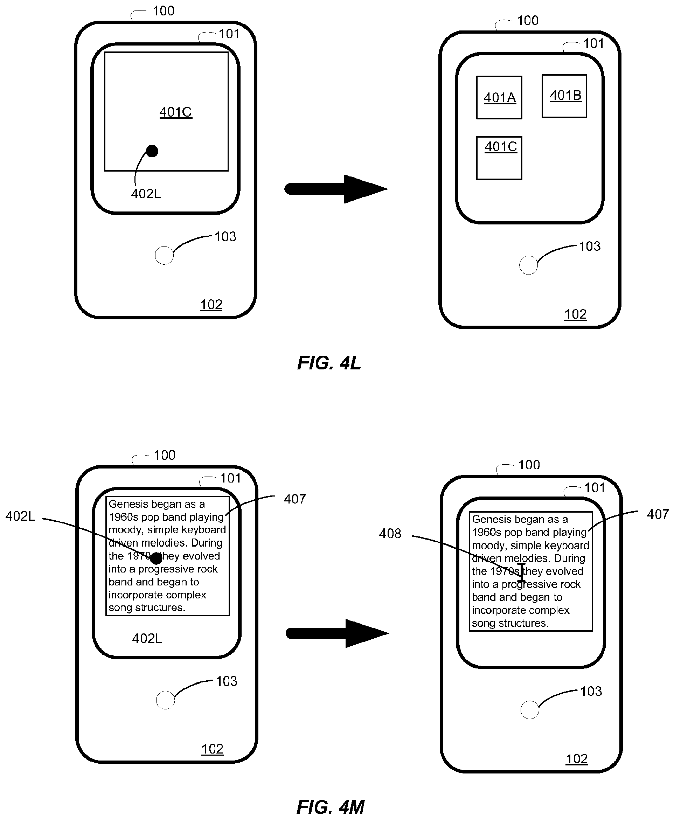

*Fit:* Referring now to Fig. 4K, in one embodiment, if the user double-taps (tap twice within some period of time) at a location 402K on an object 401C displayed on screen 101, the display zooms in so that the object 401C fills screen 101. As shown in Fig. 4L, if the object 401C is already zoomed to fit, then the double-tap command at a location 402L within the object 401C returns the object 401C to its previous size.

*Text Navigation:* Referring now to Fig. 4M, in one embodiment, when text is displayed on screen 101, such as in text edit field 407, the user can tap at a position 402L in field 407. A text cursor 408 moves to the tapped location.

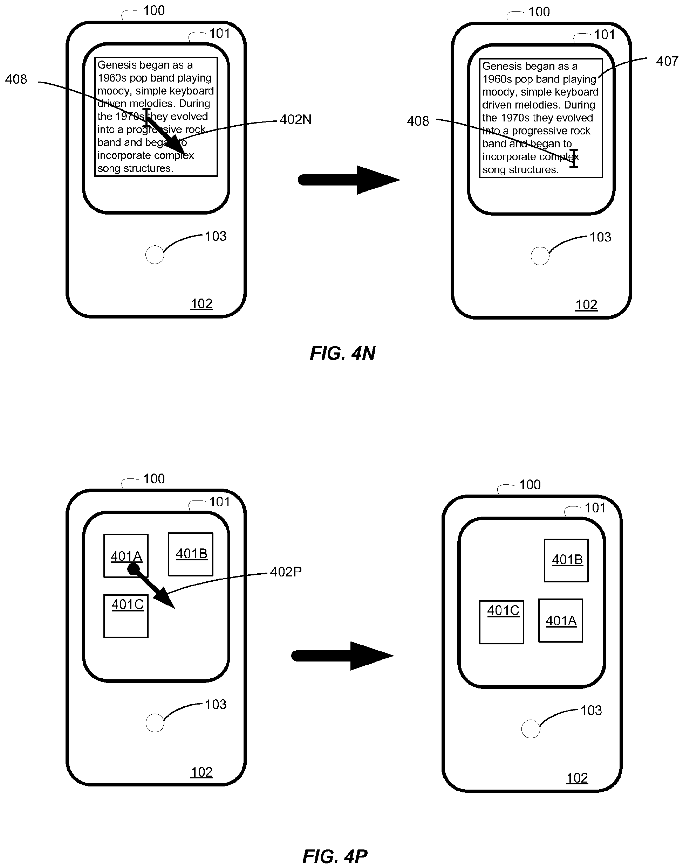

Referring now to Fig. 4N, in one embodiment, if the user holds on a position in text field 407 for a short period of time (such as 500 ms or more), and then performs a gesture 402N to move to another location within field 407, cursor 408 moves within field 407, following the position of the user's finger. Lifting the finger leaves cursor 408 at its last position, as shown in the right side of Fig. 4N. In one embodiment, a user can navigate within text, or move an onscreen object, using relative motion. The movement of the object being moved (text cursor or selected object) is relative to the motion of the user's finger (onscreen or off). Thus, the object does not jump to the location of the user's finger, but rather it moves in the same direction as the motion of the user's finger, and the magnitude of the movement is proportional (either linearly or by some scaled factor) to the magnitude of the motion of the user's finger. The object movement can be scaled by a factor or factors (such as for example speed, distance, fixed ratio, or the like) or even inverted.

*Move:* Referring now to Fig. 4P, there is shown an example of a technique for moving an object 401 according to one embodiment. The user holds on a position in object 401A for a short period of time (such as 500 ms or more), and then performs a gesture 402P to move to another location on screen 101. Object 401A moves, following the position of the user's finger. Lifting the finger leaves object 401A at its last position, as shown in the right side of Fig. 4P.

In one embodiment, if, while performing the gesture 402P, the user drags the object 401A over a valid target object 401 that can act on or receive the dragged object 401A, visual feedback is provided to indicate that the potential target object 401 is a valid target. For example, the potential target object 401 may be momentarily highlighted while the dragged object 401A is positioned over it. If the user ends gesture 402P while the dragged object 401A is over a valid target object 401, an appropriate action is performed: for example, the dragged object 401A may be inserted in the target object 401, or the target object 401 may launch as an application and open the dragged object 401.

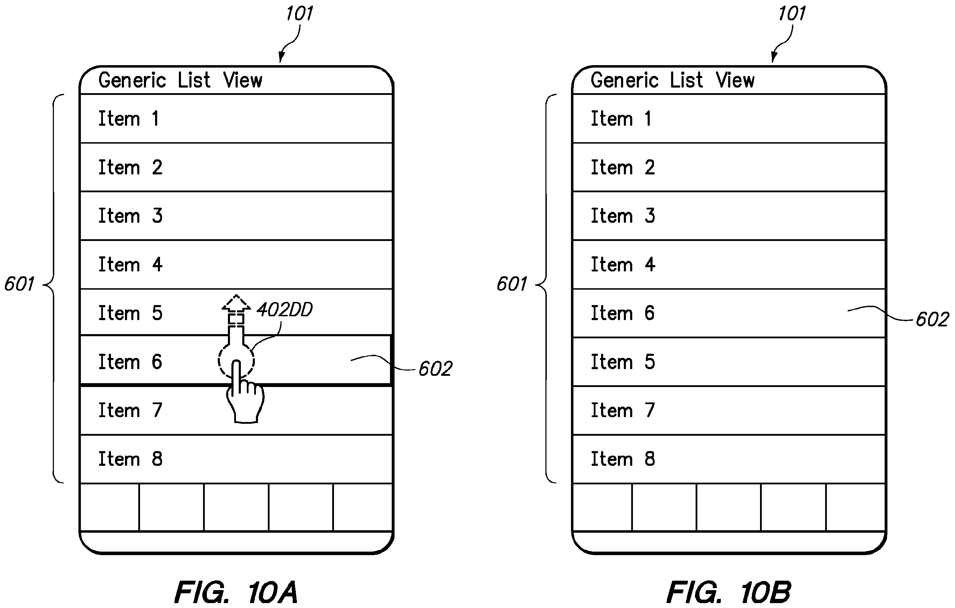

In a list view, a move operation can cause items in the list to be reordered. Referring now to Figs. 10A and 10B, there is shown an example of a tap, hold, and drag gesture to reorder items in a list. A user performs a tap, hold and drag gesture 402DD on item 602, as shown in Fig. 10A. After the user completes the drag operation, item 602 is shown at its new position, as shown in Fig. 10B.

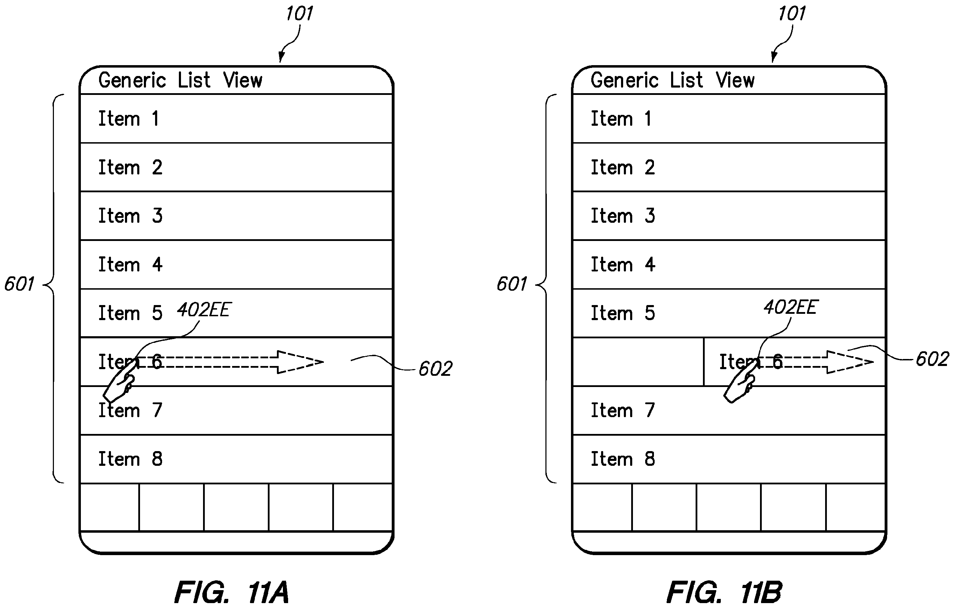

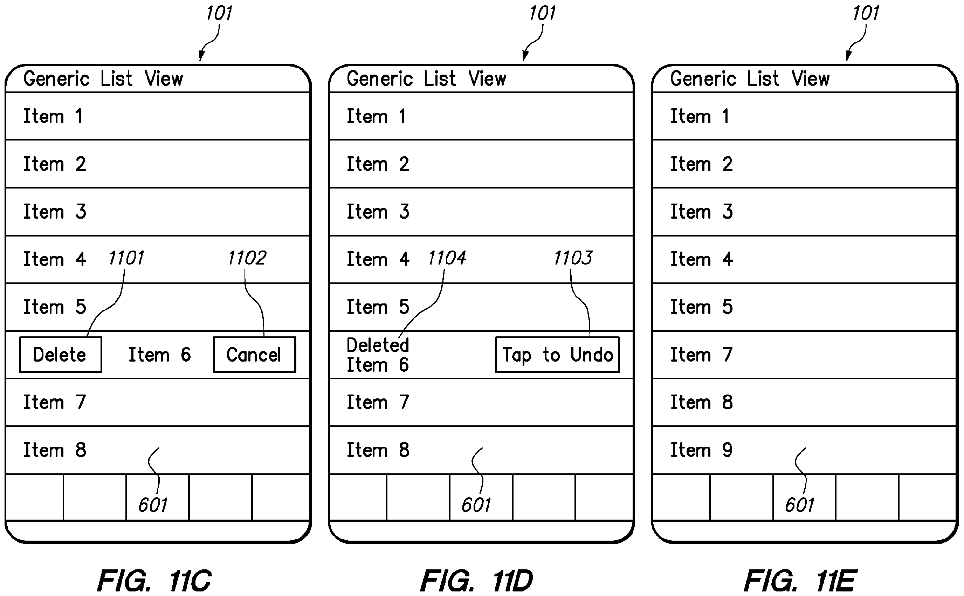

*Delete:* In one embodiment, the user can delete an item by performing a swipe gesture to drag the item off screen 101. Referring now to Figs. 11A through 11E, there is shown an example of a swipe gesture 402EE to delete an item 602 from a list 601. The user begins swipe gesture 402EE in Fig. 11A and continues it in Fig. 11B. Once item 602 has been dragged off screen 101, the user is prompted to confirm the delete operation. As shown in Fig. 11C, this prompt can take the form of a Delete button 1101; a Cancel button 1102 is also provided, in case the user wishes to cancel the delete operation. If the user confirms the operation by tapping Delete button 1101, item 602 is deleted and no longer appears on list 601.

As shown in Fig. 11D, in one embodiment, a message 1104 appears informing the user that item 602 has been deleted, and an Undo button 1103 is provided to give the user an opportunity to undo the deletion. In one embodiment, message 1104 and button 1103 only appear for a fixed period of time (for example, three seconds), after which message 1104 and button 1103 disappear, and the bottom portion of the list moves up to fill the space, as shown in Fig. 11E. In another embodiment, no confirmation is displayed; rather, when the user swipes an item off list 601, the display of Fig. 11E is shown.

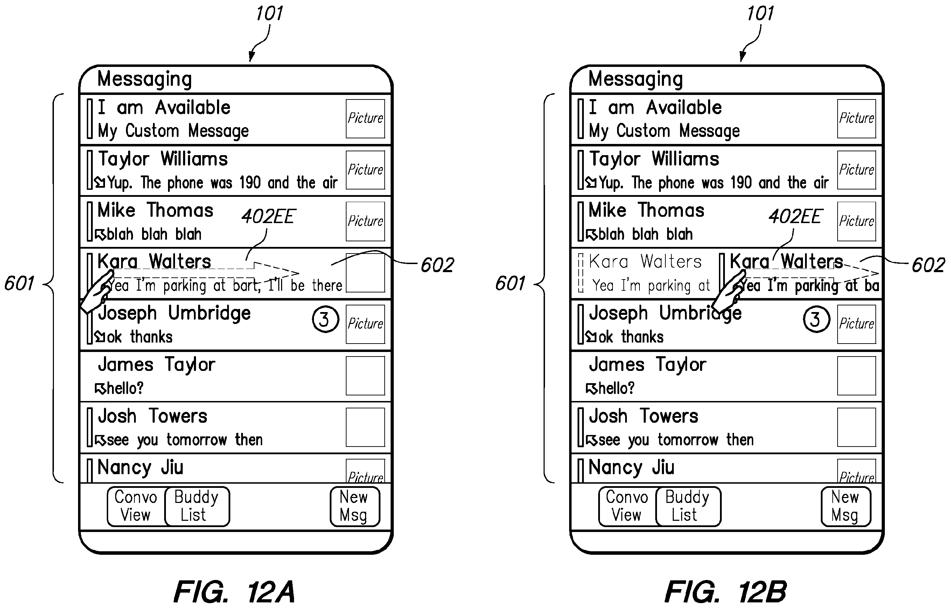

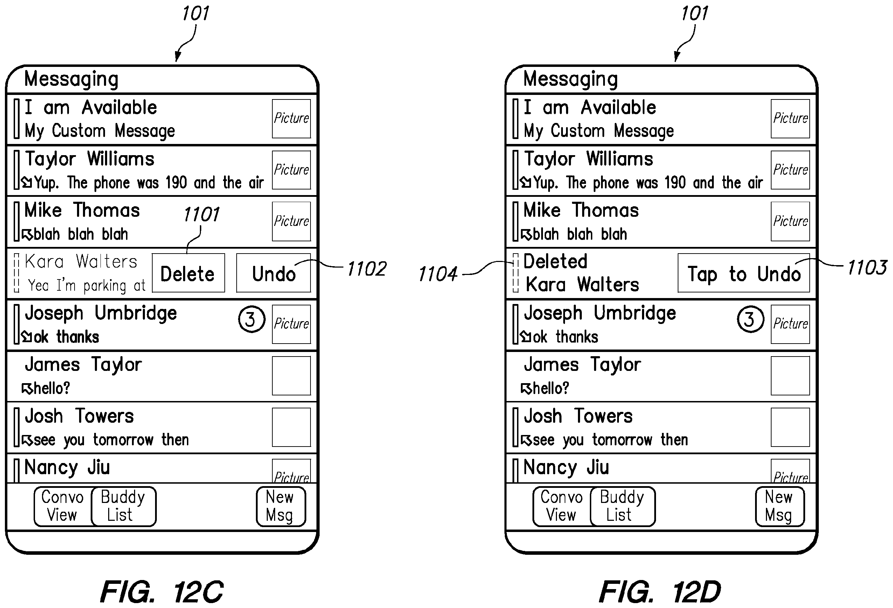

Another example of swipe gesture 402EE is shown in Figs. 12A through 12D, in the context of an email application where items 602 are email messages. The user begins swipe gesture 402EE in Fig. 12A and continues it in Fig. 12B. Fig. 12C depicts Delete button 1101 and Undo button 1102 (which performs the same function as Cancel button 1102 in Fig. 11C), giving the user an opportunity to confirm or cancel the delete operation. Fig. 12D depicts message 1104 informing the user that item 602 has been deleted, as well as Undo button 1103 to give the user an opportunity to undo the deletion.

One skilled in the art will recognize that other gestures 402 may be performed on screen 101, according to well-known techniques of direct manipulation in connection with touch-sensitive screens and objects displayed thereon.

### Commands Performed by Combining Gestures in Gesture Area 102 with Input on Touch-Sensitive Screen 101

In one embodiment, the device of the present invention recognizes commands that are activated by combining gestures 402 in gesture area 102 within input on touch-sensitive screen 101. Such commands may be activated by, for example:
- Beginning a gesture in gesture area 102 and completing it on touch-sensitive screen 101;
- Beginning a gesture on touch-sensitive screen 101 and completing it in gesture area 102;
- Performing a multi-part gesture that involves at least one contact with gesture area 102 followed by at least one contact with touch-sensitive screen 101;
- Performing a multi-part gesture that involves at least one contact with touch-sensitive screen 101 followed by at least one contact with gesture area 102; and
- Performing a gesture that involves substantially simultaneous or contemporaneous contact with touch-sensitive screen 101 and gesture area 102 (for example, a component of the gesture is performed on screen 101 while another component of the gesture is performed on gesture area 102).

One example of such a gesture 402 is to perform any of the previously-described gestures on screen 101 while also touching gesture area 102. Thus, the contact with gesture area 102 serves as a modifier for the gesture 402 being performed on screen 101.

Another example is to perform one of the previously-described gestures in gesture area 102, while also touching an object 401 on screen 101. Thus, the contact with the object 401 serves as a modifier for the gesture 402 being performed in gesture area 102.

In some embodiments, the display changes while a user is in the process of performing a gesture in gesture area 102, to reflect current valid targets for the gesture. In this manner, when a user begins a gesture in gesture area 102, he or she is presented with positive feedback that the gesture is recognized along with an indication of valid targets for the gesture.

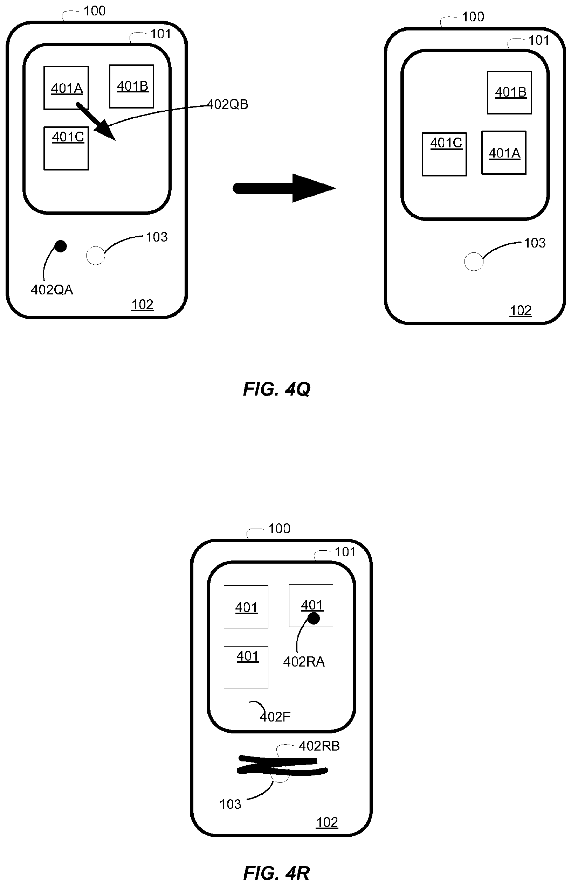

Referring now to Fig. 4Q, there is shown an example according to one embodiment. The user holds one finger at location 402QA in gesture area 102 while dragging another finger on screen 101, performing gesture 402QB. This causes object 401A, (or a cursor or other on-screen item) to be dragged along with the second finger. When the second finger is removed from screen 101, object 401A or the other on-screen item is dropped, as shown in the right side of Fig. 4Q. Thus, the finger in gesture area 102 acts as a modifier, obviating the need for the user to hold the second finger on the on-screen item in order to initiate a drag operation. In other embodiments, holding a finger in gesture area 102 while performing a gesture on screen 101 causes the screen gesture to be modified from its normal function in some other way.

Alternatively, in one embodiment, the use can perform a two-part gesture sequence: a tap gesture 402 in gesture area 102, followed by a tap, drag, or other gesture 402 on an on-screen object 401 or other area of screen 101 so as to identify the intended target of the gesture sequence. In one embodiment, the user can perform the tap gesture 402G anywhere within gesture area 102; in another embodiment, the gesture may have different meaning depending on where it is performed. In one embodiment, the sequence can be reversed, so that the target object 401 can be identified first by a tap on screen 101, and the action to be performed can be indicated subsequently by a gesture 402 in gesture area 102.

Referring now to Fig. 4R, there is shown another example of a gesture sequence having gesture components that can be performed sequentially or simultaneously according to one embodiment. In the example of Fig. 4R, the user performs a horizontal scratch gesture 402RB within gesture area 102, and a tap gesture 402RA on an on-screen object 401. In one embodiment, gesture 402RB indicates a delete command and gesture 402RA identifies the target 401 of the command. In one embodiment, the user can perform the horizontal scratch gesture 402RB anywhere within gesture area 102; in another embodiment, the gesture may have different meaning depending on where it is performed. In one embodiment, the sequence can be performed in either order, so that the target 401 can be specified by gesture 402RA either before or after the scratch gesture 402RB is performed. In yet another embodiment, the gestures 402RA and 402RB can be performed contemporaneously (for example, the user might hold a finger at location 402RA while performing scratch gesture 402RB).

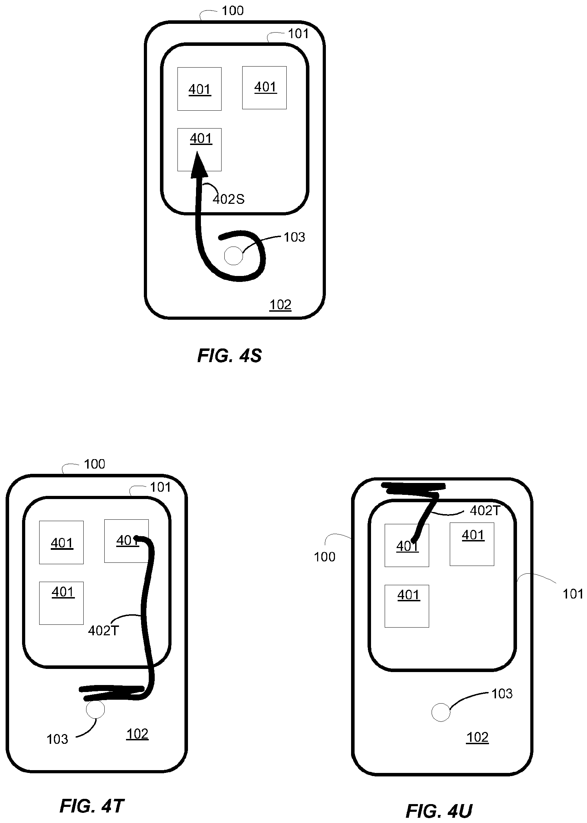

Referring now to Fig. 4S, there is shown an example of a gesture 402 that begins in gesture area 102 and is completed on touch-sensitive screen 101 according to one embodiment. In the example of Fig. 4S, the user performs a clockwise orbit gesture 402S starting within gesture area 102 and ending on an on-screen object 401. Thus, on-screen object 401 is identified as the target of the command. In one embodiment, such a gesture 402S can perform a scale or zoom object function. In one embodiment, the user can begin the orbit gesture 402S anywhere within gesture area 102; in another embodiment, the gesture may have different meaning depending on whether it circles button 103 or is performed in some other part of gesture area 102. In one embodiment, an orbit gesture may have a different meaning if performed in a counterclockwise direction.

In the example of Fig. 4T, the user performs a horizontal scratch gesture 402T starting within gesture area 102 and ending on an on-screen object 401 according to one embodiment. Thus, on-screen object 401 is identified as the target of the command. In one embodiment, such a gesture 402T can perform a delete function. The user can begin the horizontal scratch gesture 402T anywhere within gesture area 102, as long as the resultant gesture 402T is recognizable as a horizontal scratch, and as long as the gesture 402T ends at the desired location to identify the correct on-screen object 401 as a target.

Fig. 4U is similar to Fig. 4T, but illustrates the horizontal scratch gesture 402T being initiated in an area of gesture area 102 above screen 101 and ending on an on-screen object 401.

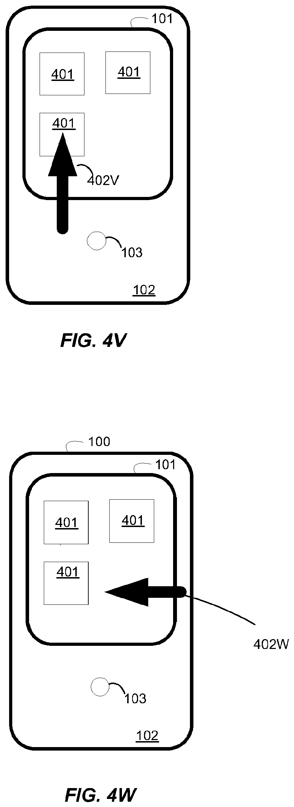

Additional examples are shown in Figs. 4V and 4W. In the example of Fig. 4V, the user performs a swipe up gesture 402V starting within gesture area 102 and ending on an on-screen object 401, according to one embodiment. Thus, on-screen object 401 is identified as the target of the command. In one embodiment, such a gesture 402V can perform an "open this target" function. The user can begin the swipe up gesture 402V anywhere within gesture area 102, as long as the resultant gesture 402Vis recognizable as an upward swipe, and as long as the gesture 402V ends at the desired location to identify the correct on-screen object 401 as a target.

In the example of Fig. 4W, the user performs a half-swipe left gesture 402W starting within a portion of gesture area 102 adjacent to screen 101, and ending within screen 101, according to one embodiment. This example illustrates a situation where the gesture 402W extends onto screen 101, but no object is currently located at the ending point of the gesture 402W. Thus, contrary to the example of Fig. 4V, here no on-screen object is identified as the target of the command. Accordingly, such a gesture 402W might return the user to a previous view within an application, as described above for gesture 402A in Fig. 4A.

In one embodiment, a gesture performs the same function whether entered entirely within gesture area 102 (as in Fig. 4A) or entered partially in gesture area 102 and partially on screen 101. As with Fig. 4A, the user can perform the half-swipe left gesture 402W beginning anywhere within gesture area 102. In some embodiments, the same gesture 402W can be performed within screen 101, or beginning within screen 101 and ending in gesture area 102, as long as the area of screen 101 in which gesture 402W is initiated does not contain an activatable object 401 (or as long as there is no ambiguity as to the function the user intends to activate).

### Method

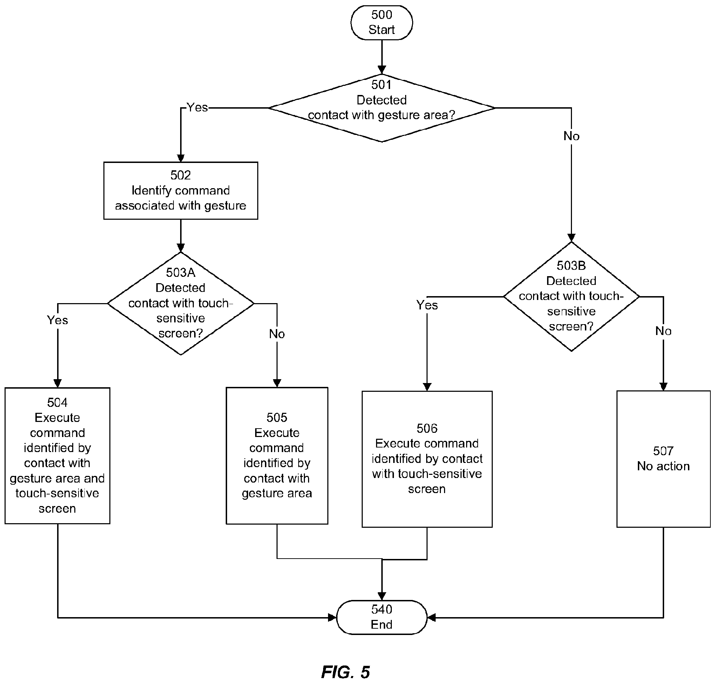

Referring now to Fig. 5, there is shown a flowchart depicting a method of operation for the present invention, according to one embodiment.

In one embodiment, the user provides input in the form of contact with gesture area 102 and/or contact with touch-sensitive screen 101. As described above, if both surfaces are touched, the contact with gesture area 102 can precede or follow the contact with touch-sensitive screen 101, or the two touches can take place substantially simultaneously or contemporaneously.

In one embodiment, if device 100 detects 501 contact with gesture area 102, it identifies 502 a command associated with the gesture the user performed in touching gesture area 102. Then, if device 100 detects 503A contact with touch-sensitive screen 101, it executes 504 a command identified by the contact with gesture area 102 and with touch-sensitive screen 101. For example, the gesture area 102 gesture may identify the command and the screen 101 gesture may specify a target for the command, as described in more detail above. If, in 503A, device 100 does not detect contact with touch-sensitive screen 101, it executes 505 a command identified by the contact with gesture area 102.

In one embodiment, if, in 501, device 100 does not detect contact with gesture area 102, but it detects 503B contact with touch-sensitive screen 101, it executes 506 a command identified by the contact with touch-sensitive screen 101. For example, screen 101 gesture may specify an action and a target by direct manipulation such as by tapping, as described in more detail above.

In one embodiment, if device 100 does not detect 501 contact with gesture area 102 and does not detect 503B contact with screen 101, no action is taken 507.

As can be seen from the above description, the present invention provides several advantages over prior art devices employing touch-sensitive surfaces and screens. By employing the techniques described above, the present invention simplifies operation of the device, and provides the potential to offer a user a large vocabulary of possible actions in a compact space. For example, beginners can use direct manipulation as the primary input mechanism, while expert users can use gestures.

The present invention has been described in particular detail with respect to one possible embodiment. Those of skill in the art will appreciate that the invention may be practiced in other embodiments. First, the particular naming of the components, capitalization of terms, the attributes, data structures, or any other programming or structural aspect is not mandatory or significant, and the mechanisms that implement the invention or its features may have different names, formats, or protocols. Further, the system may be implemented via a combination of hardware and software, as described, or entirely in hardware elements, or entirely in software elements. Also, the particular division of functionality between the various system components described herein is merely exemplary, and not mandatory; functions performed by a single system component may instead be performed by multiple components, and functions performed by multiple components may instead be performed by a single component.

Reference herein to "one embodiment", "an embodiment", or to "one or more embodiments" means that a particular feature, structure, or characteristic described in connection with the embodiments is included in at least one embodiment of the invention. Further, it is noted that instances of the phrase "in one embodiment" herein are not necessarily all referring to the same embodiment.

Some portions of the above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps (instructions) leading to a desired result. The steps are those requiring physical manipulations of physical quantities. Usually, though not necessarily, these quantities take the form of electrical, magnetic or optical signals capable of being stored, transferred, combined, compared and otherwise manipulated. It is convenient at times, principally for reasons of common usage, to refer to these signals as bits, values, elements, symbols, characters, terms, numbers, or the like. Furthermore, it is also convenient at times, to refer to certain arrangements of steps requiring physical manipulations of physical quantities as modules or code devices, without loss of generality.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "displaying" or "determining" or the like, refer to the action and processes of a computer system, or similar electronic computing module and/or device, that manipulates and transforms data represented as physical (electronic) quantities within the computer system memories or registers or other such information storage, transmission or display devices.

Certain aspects of the present invention include process steps and instructions described herein in the form of an algorithm. It should be noted that the process steps and instructions of the present invention can be embodied in software, firmware or hardware, and when embodied in software, can be downloaded to reside on and be operated from different platforms used by a variety of operating systems.

The present invention also relates to an apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Further, the computers referred to herein may include a single processor or may be architectures employing multiple processor designs for increased computing capability.

The algorithms and displays presented herein are not inherently related to any particular computer, virtualized system, or other apparatus. Various general-purpose systems may also be used with programs in accordance with the teachings herein, or it may prove convenient to construct more specialized apparatus to perform the required method steps. The required structure for a variety of these systems will be apparent from the description above. In addition, the present invention is not described with reference to any particular programming language. It will be appreciated that a variety of programming languages may be used to implement the teachings of the present invention as described herein, and any references above to specific languages are provided for disclosure of enablement and best mode of the present invention.

While the invention has been described with respect to a limited number of embodiments, those skilled in the art, having benefit of the above description, will appreciate that other embodiments may be devised which do not depart from the scope of the present invention as described herein. In addition, it should be noted that the language used in the specification has been principally selected for readability and instructional purposes, and may not have been selected to delineate or circumscribe the inventive subject matter. Accordingly, the disclosure of the present invention is intended to be illustrative, but not limiting, of the scope of the invention, which is set forth in the claims.

## Claims

1. A device (100) for accepting gesture commands from a user, comprising:
a touch-sensitive display screen (101) occupying a first portion of a front surface of the device, adapted to detect user gestures performed thereon or proximate thereto and to display at least one directly-manipulable object;
a touch-sensitive gesture area (102) occupying a second portion of the front surface of the device, adapted to detect user gestures performed thereon or proximate thereto, wherein the second portion extends outside the first portion; and
a processor, coupled to the touch-sensitive display screen and to the touch-sensitive gesture area, adapted to interpret a plurality of gesture commands, the plurality of gesture commands comprising at least one command specified by user interaction with both the touch-sensitive gesture area and the touch-sensitive display screen.

2. The device of claim 1, wherein:
the touch-sensitive display screen is adapted to detect user gestures performed proximate to the surface of the touch-sensitive display screen; and
the touch-sensitive gesture area is adapted to detect user gestures performed proximate to the surface of the touch-sensitive gesture area.

3. The device of claim 1, wherein at least one command is specified by combination of a gesture performed proximate to the touch-sensitive gesture area and a direct manipulation of at least one object displayed on the touch-sensitive display screen.

4. The device of claim 3, wherein:
a gesture performed proximate to the touch-sensitive gesture area specifies an action to be performed; and
a gesture performed proximate to the touch-sensitive display screen specifies an object on which the action is to be performed; and/or
wherein:
a gesture performed proximate to the touch-sensitive display screen specifies a command; and
a gesture performed proximate to the touch-sensitive gesture area modifies the command.

5. The device of claim 1, wherein the plurality of gesture commands control operation of a software application running on the device.

6. The device of claim 1, where in the touch-sensitive gesture area is adjacent to the touch-sensitive display screen.

7. The device of claim 1, wherein the touch-sensitive gesture area adjoins the touch-sensitive display screen.

8. The device of claim 1, wherein the touch-sensitive gesture area surrounds the touch-sensitive display screen.

9. The device of claim 1, wherein the touch-sensitive gesture area occupies substantially the entire portion of the front surface of the device not occupied by the touch-sensitive display screen.

10. The device of claim 1, further comprising:
at least one physical button positioned within the front surface of the device; wherein
the touch-sensitive gesture area surrounds the physical button.

11. The device of claim 10, wherein the at least one physical button is touch-sensitive; and/or
the touch-sensitive display screen and the touch-sensitive gesture area detect user contact by detecting changes in a capacitance field.

12. A method for accepting gesture commands from a user, comprising:
displaying at least one directly-manipulable object on a touch-sensitive display screen (101) occupying a first portion of a front surface of a device (100), the touch-sensitive display screen being adapted to detect user gestures;
detecting user gestures proximate to or on both the touch-sensitive display screen and a touch-sensitive gesture area (102) occupying a second portion of the front surface of the device, the touch-sensitive gesture area being adapted to detect user gestures, wherein the second portion extends outside the first portion;
interpreting the detected user gestures as a plurality of gesture commands; and
performing actions responsive to the interpreted gesture commands, wherein the plurality of gesture commands comprises at least one command specified by user interaction with both the touch-sensitive gesture area and the touch-sensitive display screen.

13. The method of claim 12, wherein at least one gesture comprises at least one action performed within the touch-sensitive gesture area and a direct manipulation of at least one object displayed on the touch-sensitive display screen.

14. A computer program product for accepting gesture commands from a user, comprising:
a computer-readable storage medium; and
computer program code, encoded on the medium, programmatically configured to perform the steps of:
displaying at least one directly-manipulable object on a touch-sensitive display screen (101) occupying a first portion of a front surface of a device (100), the touch-sensitive display screen being adapted to detect user gestures;
detecting user gestures proximate to or on both the touch-sensitive display screen and a touch-sensitive gesture area (102) occupying a second portion of the front surface of the device, the touch-sensitive gesture area being adapted to detect user gestures, wherein the second portion extends outside the first portion;
interpreting the detected user gestures; as a plurality of gesture commands; and
performing actions responsive to the interpreted gesture commands, wherein the plurality of gesture commands comprises at least one command specified by user interaction with both the touch-sensitive gesture area and the touch-sensitive display screen.

15. The computer program of claim 14, wherein at least one gesture comprises at least one action performed within the touch-sensitive gesture area and a direct manipulation of at least one object displayed on the touch-sensitive display screen.

## Patentansprüche

1. Vorrichtung (100) zum Akzeptieren von Gestenbefehlen von einem Benutzer, die Folgendes umfasst:
einen berührungsempfindlichen Anzeigeschirm (101), der einen ersten Abschnitt einer Frontfläche der Vorrichtung einnimmt, ausgelegt zum Erkennen von daran oder in der Nähe davon ausgeführten Benutzergesten und zum Anzeigen von wenigstens einem direkt manipulierbaren Objekt;
einen berührungsempfindlichen Gestenbereich (102), der einen zweiten Abschnitt der Frontfläche der Vorrichtung einnimmt, ausgelegt zum Erkennen von darauf oder in der Nähe davon ausgeführten Benutzergesten, wobei der zweite Abschnitt außerhalb des ersten Abschnitts verläuft; und
einen Prozessor, gekoppelt mit dem berührungsempfindlichen Anzeigeschirm und mit dem berührungsempfindlichen Gestenbereich, ausgelegt zum Interpretieren einer Mehrzahl von Gestenbefehlen, wobei die Mehrzahl von Gestenbefehlen wenigstens einen Befehl umfasst, der von einer Benutzerinteraktion sowohl mit dem berührungsempfindlichen Gestenbereich als auch mit dem berührungsempfindlichen Anzeigeschirm vorgegeben wird.

2. Vorrichtung nach Anspruch 1, wobei:
der berührungsempfindliche Anzeigeschirm zum Erkennen von in der Nähe der Oberfläche des berührungsempfindlichen Anzeigeschirms ausgeführten Benutzergesten ausgelegt ist; und
der berührungsempfindliche Gestenbereich zum Erkennen von in der Nähe der Oberfläche des berührungsempfindlichen Gestenbereichs ausgeführten Benutzergesten ausgelegt ist.

3. Vorrichtung nach Anspruch 1, wobei wenigstens ein Befehl durch eine Kombination einer in der Nähe des berührungsempfindlichen Gestenbereichs ausgeführten Geste und einer direkten Manipulation von wenigstens einem auf dem berührungsempfindlichen Anzeigeschirm angezeigten Objekt vorgegeben wird.

4. Vorrichtung nach Anspruch 3, wobei:
eine in der Nähe des berührungsempfindlichen Gestenbereichs ausgeführte Geste eine durchzuführende Aktion vorgibt; und
eine in der Nähe des berührungsempfindlichen Anzeigeschirms ausgeführte Geste ein Objekt vorgibt, an dem die Aktion ausgeführt werden soll; und/oder
wobei:
eine in der Nähe des berührungsempfindlichen Anzeigeschirms ausgeführte Geste einen Befehl vorgibt; und
eine in der Nähe des berührungsempfindlichen Gestenbereichs ausgeführte Geste den Befehl modifiziert.

5. Vorrichtung nach Anspruch 1, wobei die Mehrzahl von Gestenbefehlen den Betrieb einer auf der Vorrichtung laufenden Software-Anwendung steuert.

6. Vorrichtung nach Anspruch 1, wobei sich der berührungsempfindliche Gestenbereich neben dem berührungsempfindlichen Anzeigeschirm befindet.

7. Vorrichtung nach Anspruch 1, wobei der berührungsempfindliche Gestenbereich an den berührungsempfindlichen Anzeigeschirm angrenzt.

8. Vorrichtung nach Anspruch 1, wobei der berührungsempfindliche Gestenbereich den berührungsempfindlichen Anzeigeschirm umgibt.

9. Vorrichtung nach Anspruch 1, wobei der berührungsempfindliche Gestenbereich im Wesentlichen den gesamten Abschnitt der Frontfläche der Vorrichtung einnimmt, der nicht von dem berührungsempfindlichen Anzeigeschirm eingenommen wird.

10. Vorrichtung nach Anspruch 1, die ferner Folgendes umfasst:
wenigstens eine physische Taste, die innerhalb der Frontfläche der Vorrichtung positioniert ist;
wobei der berührungsempfindliche Gestenbereich die physische Taste umgibt.

11. Vorrichtung nach Anspruch 10, wobei die wenigstens eine physische Taste berührungsempfindlich ist; und/oder
der berührungsempfindliche Anzeigeschirm und der berührungsempfindliche Gestenbereich Benutzerkontakt durch Erkennen von Änderungen in einem Kapazitätsfeld erkennen.

12. Verfahren zum Akzeptieren von Gestenbefehlen von einem Benutzer, das Folgendes beinhaltet:
Anzeigen von wenigstens einem direkt manipulierbaren Objekt auf einem berührungsempfindlichen Anzeigeschirm (101), der einen ersten Abschnitt einer Frontfläche einer Vorrichtung (100) einnimmt, wobei der berührungsempfindliche Anzeigeschirm zum Erkennen von Benutzergesten ausgelegt ist;
Erkennen von Benutzergesten in der Nähe von oder auf dem berührungsempfindlichen Anzeigeschirm und einem berührungsempfindlichen Gestenbereich (102), der einen zweiten Abschnitt der Frontfläche der Vorrichtung einnimmt, wobei der berührungsempfindliche Gestenbereich zum Erkennen von Benutzergesten ausgelegt ist, wobei der zweite Abschnitt außerhalb des ersten Abschnitts verläuft;
Interpretieren der erkannten Benutzergesten als eine Mehrzahl von Gestenbefehlen; und
Ausführen von Aktionen als Reaktion auf die interpretierten Gestenbefehle, wobei die Mehrzahl von Gestenbefehlen wenigstens einen Befehl umfasst, der durch eine Benutzerinteraktion sowohl mit dem berührungsempfindlichen Gestenbereich als auch mit dem berührungsempfindlichen Anzeigeschirm vorgegeben wird.

13. Verfahren nach Anspruch 12, wobei wenigstens eine Geste wenigstens eine innerhalb des berührungsempfindlichen Gestenbereichs ausgeführte Aktion und eine direkte Manipulation von wenigstens einem auf dem berührungsempfindlichen Anzeigeschirm angezeigten Objekt umfasst.

14. Computerprogrammprodukt zum Akzeptieren von Gestenbefehlen von einem Benutzer, das Folgendes umfasst:
ein computerlesbares Speichermedium; und
Computerprogrammcode, codiert auf dem Medium, programmatisch konfiguriert zum Ausführen der folgenden Schritte:
Anzeigen von wenigstens einem direkt manipulierbaren Objekt auf einem berührungsempfindlichen Anzeigeschirm (101), der einen ersten Abschnitt einer Frontfläche einer Vorrichtung (100) einnimmt, wobei der berührungsempfindliche Anzeigeschirm zum Erkennen von Benutzergesten ausgelegt ist;
Erkennen von Benutzergesten in der Nähe von oder auf dem berührungsempfindlichen Anzeigeschirm und einem berührungsempfindlichen Gestenbereich (102), der einen zweiten Abschnitt der Frontfläche der Vorrichtung einnimt, wobei der berührungsempfindliche Gestenbereich zum Erkennen von Benutzergesten ausgelegt ist, wobei der zweite Abschnitt außerhalb des ersten Abschnitts verläuft;
Interpretieren der erkannten Benutzergesten als eine Mehrzahl von Gestenbefehlen; und
Ausführen von Aktionen als Reaktion auf die interpretierten Gestenbefehle, wobei die Mehrzahl von Gestenbefehlen wenigstens einen Befehl umfasst, der durch eine Benutzeraktion sowohl mit dem berührungsempfindlichen Gestenbereich als auch mit dem berührungsempfindlichen Anzeigeschirm vorgegeben wird.

15. Computerprogramm nach Anspruch 14, wobei wenigstens eine Geste wenigstens eine in dem berührungsempfindlichen Gestenbereich ausgeführte Aktion und eine direkte Manipulation von wenigstens einem auf dem berührungsempfindlichen Anzeigeschirm angezeigten Objekt umfasst.

## Revendications

1. Un dispositif (100) d'acceptation de commandes gestuelles à partir d'un utilisateur, comprenant :
un écran d'affichage sensible à un contact tactile (101) occupant une première partie d'une surface avant du dispositif, adapté de façon à détecter des gestes d'utilisateur exécutés sur celui-ci ou à proximité de celui-ci et à afficher au moins un objet directement manipulable,
une zone de geste sensible à un contact tactile (102) occupant une deuxième partie de la surface avant du dispositif, configurée de façon à détecter des gestes d'utilisateur exécutés sur celle-ci ou à proximité de celle-ci, où la deuxième partie s'étend à l'extérieur de la première partie, et
un processeur, couplé à l'écran d'affichage sensible à un contact tactile et à la zone de geste sensible à un contact tactile, adapté de façon à interpréter une pluralité de commandes gestuelles, la pluralité de commandes gestuelles comprenant au moins une commande spécifiée par une interaction d'utilisateur avec à la fois la zone de geste sensible à un contact tactile et l'écran d'affichage sensible à un contact tactile.

2. Le dispositif selon la Revendication 1, où :
l'écran d'affichage sensible à un contact tactile est adapté de façon à détecter des gestes d'utilisateur exécutés à proximité de la surface de l'écran d'affichage sensible à un contact tactile, et
la zone de geste sensible à un contact tactile est adaptée de façon à détecter des gestes d'utilisateur exécutés à proximité de la surface de la zone de geste sensible à un contact tactile.

3. Le dispositif selon la Revendication 1, où au moins une commande est spécifiée par la combinaison d'un geste exécuté à proximité de la zone de geste sensible à un contact tactile et d'une manipulation directe d'au moins un objet affiché sur l'écran d'affichage sensible à un contact tactile.

4. Le dispositif selon la Revendication 3, où :
un geste exécuté à proximité de la zone de geste sensible à un contact tactile spécifie une action destinée à être exécutée, et
un geste exécuté à proximité de l'écran d'affichage sensible à un contact tactile spécifie un objet sur lequel l'action est destinée à être exécutée, et/ou
où :
un geste exécuté à proximité de l'écran d'affichage sensible à un contact tactile spécifie une commande, et
un geste exécuté à proximité de la zone de geste sensible à un contact tactile modifie la commande.

5. Le dispositif selon la Revendication 1, où la pluralité de commandes gestuelles commandent l'actionnement d'une application logicielle exécutée sur le dispositif.

6. Le dispositif selon la Revendication 1, où la zone de geste sensible à un contact tactile est adjacente à l'écran d'affichage sensible à un contact tactile.

7. Le dispositif selon la Revendication 1, où la zone de geste sensible à un contact tactile est contiguë à l'écran d'affichage sensible à un contact tactile.

8. Le dispositif selon la Revendication 1, où la zone de geste sensible à un contact tactile entoure l'écran d'affichage sensible à un contact tactile.

9. Le dispositif selon la Revendication 1, où la zone de geste sensible à un contact tactile occupe sensiblement la totalité de la partie de la surface avant du dispositif non occupée par l'écran d'affichage sensible à un contact tactile.

10. Le dispositif selon la Revendication 1, comprenant en outre :
au moins un bouton physique positionné à l'intérieur de la surface avant du dispositif, où la zone de geste sensible à un contact tactile entoure le bouton physique.

11. Le dispositif selon la Revendication 10, où le au moins un bouton physique est sensible à un contact tactile, et/ou
l'écran d'affichage sensible à un contact tactile et la zone de geste sensible à un contact tactile détectent un contact d'utilisateur par la détection de modifications dans un champ de capacité.

12. Un procédé d'acceptation de commandes gestuelles à partir d'un utilisateur, comprenant :
l'affichage d'au moins un objet directement manipulable sur un écran d'affichage sensible à un contact tactile (101) occupant une première partie d'une surface avant d'un dispositif (100), l'écran d'affichage sensible à un contact tactile étant adapté de façon à détecter des gestes d'utilisateur,
la détection de gestes d'utilisateur à proximité de ou sur à la fois l'écran d'affichage sensible à un contact tactile et une zone de geste sensible à un contact tactile (102) occupant une deuxième partie de la surface avant du dispositif, la zone de geste sensible à un contact tactile étant adaptée de façon à détecter des gestes d'utilisateur, où la deuxième partie s'étend à l'extérieur de la première partie,
l'interprétation des gestes d'utilisateur détectés en tant que pluralité de commandes gestuelles, et
l'exécution d'actions en réponse aux commandes gestuelles interprétées
où la pluralité de commandes gestuelles comprend au moins une commande spécifiée par une interaction d'utilisateur avec à la fois la zone de geste sensible à un contact tactile et l'écran d'affichage sensible à un contact tactile.

13. Le procédé selon la Revendication 12, où au moins un geste comprend au moins une action exécutée à l'intérieur de la zone de geste sensible à un contact tactile et une manipulation directe d'au moins un objet affiché sur l'écran d'affichage sensible à un contact tactile.

14. Un produit de programme informatique destiné à l'acceptation de commandes gestuelles à partir d'un utilisateur, comprenant :
un support à mémoire lisible par ordinateur, et
du code de programme informatique, codé sur le support, configuré par programmation de façon à exécuter les opérations suivantes :
l'affichage d'au moins un objet directement manipulable sur un écran d'affichage sensible à un contact tactile (101) occupant une première partie d'une surface avant d'un dispositif (100), l'écran d'affichage sensible à un contact tactile étant adapté de façon à détecter des gestes d'utilisateur,
la détection de gestes d'utilisateur à proximité de ou sur à la fois l'écran d'affichage sensible à un contact tactile et une zone de geste sensible à un contact tactile (102) occupant une deuxième partie de la surface avant du dispositif, la zone de geste sensible à un contact tactile étant adaptée de façon à détecter des gestes d'utilisateur, où la deuxième partie s'étend à l'extérieur de la première partie,
l'interprétation des gestes d'utilisateur détectés en tant que pluralité de commandes gestuelles, et
l'exécution d'actions en réponse aux commandes gestuelles interprétées où la pluralité de commandes gestuelles comprend au moins une commande spécifiée par une interaction d'utilisateur avec à la fois la zone de geste sensible à un contact tactile et l'écran d'affichage sensible à un contact tactile.

15. Le programme informatique selon la Revendication 14, où au moins un geste comprend au moins une action exécutée à l'intérieur de la zone de geste sensible à un contact tactile et une manipulation directe d'au moins un objet affiché sur l'écran d'affichage sensible à un contact tactile.
